# EUROPÄISCHE PATENTSCHRIFT

(11) **EP 0 535 197 B1**
(45) Veröffentlichungstag und Bekanntmachung des Hinweises auf die Patenterteilung: **23.11.1994**
(21) Anmeldenummer: 92908448.1
(22) Anmeldetag: 25.03.1992
(51) Int. Cl.: C02F 3/12, B01D 21/02, B01D 21/24

(54) **EINRICHTUNG ZUR ABTRENNUNG DES BIOLOGISCHEN SCHLAMMES VOM GEREINIGTEN WASSER**
SYSTEM FOR SEPARATING BIOLOGICAL SLUDGE FROM PURIFIED WATER
DISPOSITIF POUR SEPARER LA BOUE BIOLOGIQUE DE L'EAU EPUREE

(30) Priorität: 18.04.1991 CS 1095/91
(43) Veröffentlichungstag der Anmeldung: 07.04.1993
(73) Patentinhaber: COVSPOL SPO. S.R.O., 831 03 Bratislava (CS)
(72) Erfinder: CARSKY, Martin, 851 04 Bratislava (CS); SVRBICKY , Vladimir, 821 08 Bratislava (CS); PASKA, Igor, 841 03 Bratislava (CS); KADLECIK, Valter, 821 07 Bratislava (CS); TOLLAR, Zoltán, 900 42 Bratislava - Vidiek (CS); SIMKOVIC, Bohuslav, 851 02 Bratislava (CS); OBUCH, Ján, 811 03 Bratislava (CS); MAKOVICKY , Dusan, 841 07 Bratislava (CS)
(74) Vertreter: Köhler-Pavlik, Johann, Dipl.-Ing.
(86) Internationale Anmeldenummer: CS9200009
(87) Internationale Veröffentlichungsnummer: WO9218429

(56) Entgegenhaltungen:
- FR-A- 1 374 890
- FR-A- 2 115 766
- FR-E- 79 985

## Beschreibung

Die vorliegende Erfindung betrifft eine Einrichtung zur Abtrennung von Belebtschlamm in Anlagen zur Reinigung von Abwasser.

Das Problem der Trennung von belebten Mischungen nach einer biologischen Reinigungsstufe in gereinigtes Wasser und biologischen Schlamm wird derzeit mittels zweier Grundverfahren gelöst: Das erste Grundverfahren besteht darin, aus der belebten Mischung in einem sekundären Sedimentationsbecken - oder auch Nachbecken genannt - den Schlamm abzusetzen zu lassen, das zweite Grundverfahren ist die sogenannte Fluidwolkenseparation oder Fluidseparation, die nach dem Prinzip der Filtration arbeitet.

Der Nachteil des klassischen Sedimentationsverfahrens besteht darin, daß das Errichten eines Nachbeckens mit verhältnismäßig hohen Kosten verbunden ist, da genaue hydraulische Bedingungen zu gewährleisten sind und daher große Raumansprüche zu erfüllen sind. Besonders bei Abwässerreinigungsanlagen, die unter einer höheren hydraulischen Belastung arbeiten, z.B. städtische Abwässerreinigungsanlagen, ist es notwendig, große Nachbecken zu bauen. Wenn in den Anlagen überirdisch angeordnete Becken verwendet werden, entstehen hohe Kosten für die Isolierung des Beckens. Unterirdische Becken hingegen erforden aufwendige Aushubarbeiten. Die Frage der Rezirkulation, für die eine zuverlässige und größtenteils groß dimensionierte Pumpentechnik und Leitungen erforderlich sind, spielt ebenfalls eine große Rolle. Bei größeren Becken ist es weiters nicht möglich bzw. ökonomisch, einen effektiven Winkel im Verdickungsraum zu erreichen. Dieses Problem wird zumeist mit verfahrbaren Abwischbrücken gelöst, die ebenfalls große Kosten verursachen.

Die Fluidwolkenseparation ermöglicht, höhere Reinheitsparameter des gereinigten Wassers zu erreichen, sie ist aber besonders empfindlich gegen Änderungen der hydraulischen Bedingungen, gegen die Schlammkonzentration im System und andere technologische Parameter. Infolge dessen entstehen hohe Bedienungs- und Überwachungsansprüche. Schon kleine Veränderungen von einigen Parametern können das Aufstauen der Fluidschlammwolke bis hin zum Abfließen der Fluidschlammwolke durch Abflußrinnen verursachen, was die Qualität des gereinigten Wassers stark herabsetzt. Dieses Problem wird zumeist durch eine Überdimensionierung der Anlage gelöst, die eine weitere Kostensteigerung bedeutet.

In der französischen Patentschrift FR-A 2.115.766 wird ein Verfahren zur Abtrennung von Belebtschlamm beschrieben, das dadurch gekennzeichnet ist, daß die belebte Mischung durch zwei gegeneinander verschiebbare Wände (Doppelwand) nach unten strömt und am unteren Ende der Doppelwand der Schlamm durch eine Rohrleitung mit Pumpen abgezogen wird. Durch diese Einrichtung wird jedoch der abgezogene Schlamm nur in unzureichender Weise verdichtet, so daß sehr große Volumina an Schlamm anfallen. Weiters ist zum Abzug des Schlammes in jedem Fall eine groß dimensionierte Leitung mit Pumpen (zumeist Mammutpumpen) notwendig, die einen Energie- und Wartungsaufwand bedingt.

Der Erfindung liegt daher die Aufgabe zugrunde, die obengenannten Mängel zu beseitigen und in einer wirtschaftlichen und leicht zu bedienenden Einrichtung Belebtschlamm vom Wasser zu trennen.

Diese Aufgabe wird erfindungsgemäß dadurch gelöst, daß im Becken durch eine Querwand und eine Trennwand mit einer Überfallkante eine Beruhigungskammer gebildet wird und sich unterhalb dieser Beruhigungskammer ein Verdickungsraum befindet, der von der Trennwand mit der Überfallkante und einer weiteren Trennwand begrenzt wird, wobei zwischen der weiteren Trennwand und dem Boden des Beckens eine Spalte vorgesehen ist. Diese Spalte ist mit einem an der weiteren Trennwand angebrachten Schließelement, vorzugsweise einer Schütze, verschließbar und verbindet den Verdickungsraum mit einem aus einer Trennwand, einer einstellbaren Querwand und einem Belüftungselement bestehenden Rezirkulationskanal.

Die Funktion der erfindungsgemäßen Einrichtung beruht darauf, daß eine Belebtmischung aus der Beruhigungskammer in den Verdickungs- bzw. Sedimentationsraum strömt und der Schlamm durch die Spalte in den Prozeß rückgeführt wird, wobei der Schlamm durch das im Rezirkulationsraum befindliche Belüftungselement angesaugt wird.

Im Verdichtungsraum kann weiters eine Rohrleitung mit Pumpen vorgesehen werden, die gewährleistet, daß im Notfall schnell Schlamm abgepumpt werden kann. In diesem Fall wird die Spalte zwischen Trennwand und Beckenboden durch das Schließelement verschlossen und es kann kein Schlamm mehr angesaugt werden. Es kann so verhindert werden, daß die Fluidschlammwolke aufgestaut wird und Schlamm durch die für das gereinigte Wasser vorgesehenen Abflußrinnen abfließen kann. Die Rohrleitung mit Pumpen ist jedoch für die Funktionstüchtigkeit der erfindungsgemäßen Einrichtung nicht zwingend erforderlich.

Die erfindungsgemäße Einrichtung ist deswegen vorteilhaft, weil durch eine gleichgerichtete Schlammströmung aus dem Verdickungsraum der Abtrennungsprozeß beschleunigt wird, wobei die Strömungsgeschwidigkeit durch die Menge der in das Belüftungselement geführten Luft und durch die variable Einstellung der einstellbaren Querwand regulierbar ist. Durch die Einrichtung wird ein verdichteter Schlamm gewonnen und somit das Volumen des aus dem Prozeß abgesaugten Schlammes in vorteilhafter Weise wesentlich verringert.

Die erfindungsgemäße Einrichtung ist ferner durch den geringen Wartungsaufwand und die einfache Bedienung vorteilhaft. Das System ist direkt in den Reinigungsprozeß des Belebungsverfahrens integriert, womit der Aufwand für Bauarbeiten wie z.B. die Isolierung abfällt. Der Aufwand für Leitungen und Pumpen ist bis auf die für den Notfall vorhandene Abzugsleitung reduziert, das Ansaugen des Schlammes durch ein Belüftungselement bewirkt einen reduzierten Energieaufwand. Die Schlammverdichtung und die Regulation der Schlammrückführleitung ermöglichen es, auf Änderungen der technologischen Parameter reagieren zu können, ohne das Becken überdimensionieren zu müssen, und bewirken somit eine Verringerung des Platzbedarfes.

In einer vorteilhaften Ausführung der Erfindung ist diese in runder Form so ausgeführt, daß die Beruhigungskammer und der Verdichtungsraum von zwei jeweils in kegelmantelartiger Form ausgebildeten und in sich geschlossenen Trennwänden, die sich nach unten zu verjüngen, gebildet werden und daß die Spalte sich zwischen dem Boden des Behälters und dem unteren Ende der Trennwand befindet. Der Schlamm kann auf diese Art von allen Seiten in die nunmehr in Form von Segmenten eines Kegels, dessen Spitze nach unten weist, ausgebildete Beruhigungskammer einfließen, strömt weiter in den ähnlich ausgebildeten Verdichtungsraum und wird durch die kreisförmige Spalte nach allen Richtungen in den Prozeß zurückgesaugt.

Eine Ausführungsform der Erfindung wird nachfolgend anhand der Zeichnungen näher erläutert, wobei Fig.1 einen vertikalen Querschnitt der Grundeinheit der Erfindung zeigt, Fig.2 einen Grundriss einer möglichen Serienanordnung der Grundeinheiten, Fig.3 einen Querschnitt einer möglichen Parallelanordnung von zwei erfindungsgemäßen Einrichtungen und Fig.4 einen Grundriß dieser Parallelanordnung. Eine Ausführungsform der erfindungsgemäßen Einrichtung in einem Rundbecken ist in Fig.5 als vertikaler Querschnitt und in Fig.6 als Grundriß gezeigt.

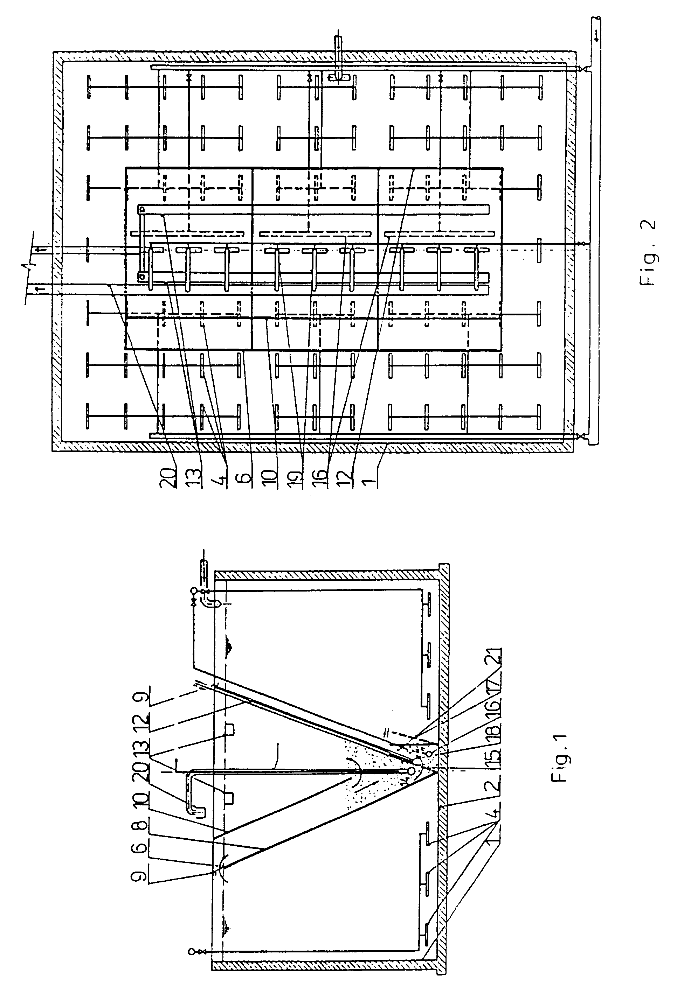

In einem Ausführungsbeispiel der erfindungsgemäßen Einrichtung laut Fig.1 und Fig.2 ist in einem Becken mit Wänden (1) und einem Boden (2) eine schrägverlaufende Trennwand (8) mit einer Überfallkante (6) lokalisiert, die einerseits am Beckenboden (2) und andererseits an einem Träger (9) befestigt ist. Parallel zu dieser Trennwand ist eine Querwand (10) gelegt, die mit der Trennwand (8) eine Beruhigungskammer (7) bildet. Diese Kammer (7) geht nach unten in einen Sedimentationsraum (11) und einen Verdickungsraum (14) über, die vom Belebungsraum (5) durch eine Querwand (12) abgetrennt sind. Zwischen dem unteren Ende dieser Querwand (12) und dem Beckenboden (2) befindet sich eine Spalte (15), die mit einer an der Querwand (12) angebrachten Schütze (18) verschließbar ist. Gegenüber der Spalte (15) befindet sich im Belebungsraum (5) eine einstellbare Querwand (17), die gemeinsam mit der Querwand (12) und einem zwischen die beiden Wände gelegten Belüftungselement den Rezirkulationskanal (21) bilden. Aus dem Verdickungsraum (14) leitet eine Rohrleitung (19) mit einer Pumpe, die in eine Schlammabflußrinne (20) mündet, welche zum Schlammbehälter führt. Im Raum zwischen der Trennwand (12) und der Querwand (10) sind Sammelrinnen (13) angeordnet. Alle Querwände sind aus verschiedenen Materialien wie z.B. Laminat, Plastmasse, Stahl, Emailblech usw. herstellbar.

Die erfindungsgemäße Einrichtung arbeitet in der nachstehend angegebenen Weise: Die Belebungsmischung läuft aus dem Belebungsraum (3) durch die einstellbare Überfallkante (6) der Trennwand (8) in die Beruhigungskammer (7) ein. In dieser werden die für einen optimalen Sedimentationsprozeß erforderlichen hydraulischen Bedingungen eingehalten. Die Belebungsmischung strömt in den Sedimentationsraum (11) weiter, in dem die Abtrennnung des gereinigten Wassers vom biologischen Schlamm erfolgt. Das Wasser fließt durch die Sammelrinnen (13) ab. Der Schlamm fließt weiter in den Verdickungsraum (14), woraus er durch die Spalte (15) zurück in den Reinigungsprozeß gezogen wird. Für das Abziehen des Schlammes wird der Rezirkulationskanal (21) verwendet, in welchem durch die Luftströmung aus dem Belüftungselement (16) Unterdruck entsteht. Im Notfall wird die Spalte (15) durch die Schütze geschlossen, womit die weitere Schlammabsaugung in den Prozeß verhindert wird. Der Schlamm wird ungestört weiter verdichtet und die erforderliche Menge davon wird durch die Rohrleitung (19) in die Schlammabflußrinne (20) abgepumpt. Im Falle von oberirdischen Behältern kann man überschüssigen Schlamm einfach ablassen.

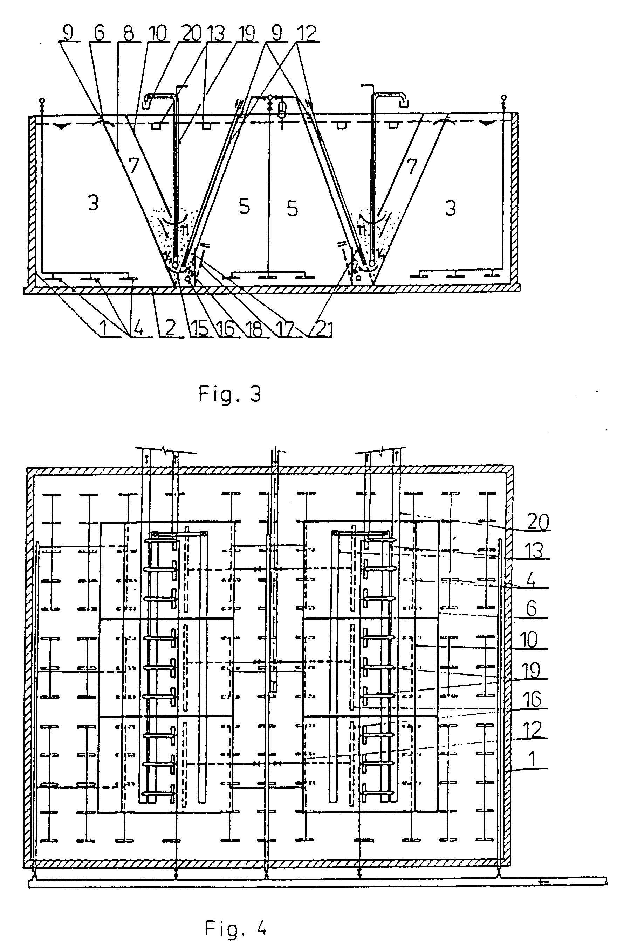

Wie in den Zeichnungen Fig.3 und Fig.4 gezeigt wird, kann man eine Parallelkombination von zwei der oben beschriebenen Einheiten bilden, wobei die Funktion der Einheiten gleich bleibt.

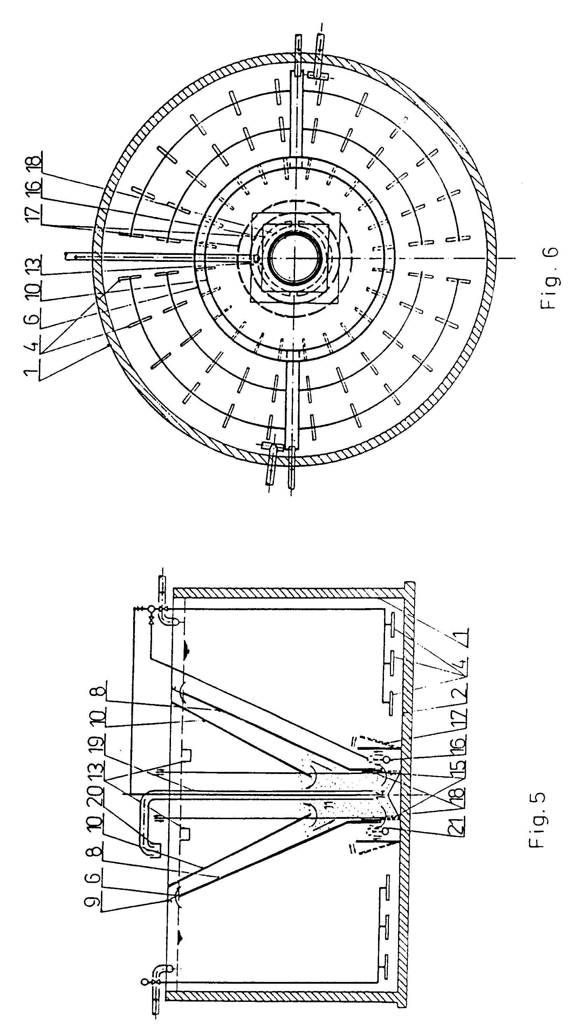

In einer vorteilhaften Ausführungsform der Erfindung ist diese kreisförmig ausgeführt, wie in Fig.5 und Fig.6 gezeigt wird. Wie aus diesen Zeichnungen ersichtlich, befinden sich in dieser Ausführungsform zwei Trennwände (8) und (10), welche jeweils kegelmantelartig ausgebildet sowie in sich geschlossen sind und sich nach unten verjüngen. Die von den Trennwänden gebildete Beruhigungskammer sowie der Verdichtungsraum sind dementsprechend in Form von Kegelsegmenten ausgebildet, wobei sich am unteren Ende des Verdichtungsraumes eine kreisförmige, verschließbare Spalte (15) befindet, hinter der sich der ebenfalls kegelsegmentartig ausgebildete Rezirkulationskanal (21), der aus der Trennwand (8), einer kreisringförmigen verstellbaren Trennwand (17) und einem Belüftungselement (16) besteht, befindet. Die Wirkungsweise der Teile dieser Ausführungsform ist dabei mit der oben beschriebenen Wirkungsweise identisch.

Die erfindungsgemäße Einrichtung kann man beim Bau von Reinigungsanlagen für Abwässer einsetzen. Die Baukosten, Bedienungsansprüche, Erhaltungskosten und technologische Einrichtungskosten werden dabei wesentlich verringert. Man kann die erfindungsgemäße Einrichtung wirkungsvoll in Becken verschiedenster Dimensionen und Formen einbauen, da sie hinsichtlich ihrer Ausführungsform sehr variabel ist. Die erfindungsgemäße Einrichtung ist in weiterer Folge bei bestehenden Abwässerreinigungsanlagen für die Intensivierung der Separationsstufe, wie auch für die Lösung verschiedener technologischer Probleme einsetzbar.

## Patentansprüche

1. Einrichtung zur Abtrennung von Belebtschlamm in Anlagen zur Reinigung von Abwasser, die durch ein System von Querwänden gebildet wird, wobei durch eine Querwand (10) und eine mit einer Überfallkante (6) versehene Trennwand (8) eine Beruhigungskammer (7) gebildet wird, unterhalb derer sich ein durch die Trennwand (8) und eine weitere Trennwand (12) begrenzter Verdickungsraum (14) befindet, wobei zwischen der Trennwand (12) und dem Boden der Einrichtung (2) eine Spalte (15) vorgesehen ist, die mit einer an der Trennwand (12) angebrachten Schütze (18) verschließbar ist und den Verdickungsraum (14) mit einem aus der Trennwand (12), einer einstellbaren Querwand (17) und einem Belüftungselement (16) gebildeten Rezirkulationskanal (21) verbindet.

2. Einrichtung nach Anspruch 1, dadurch gekennzeichnet, daß sie in runder Form so ausgeführt ist, daß anstelle der Querwand (10) und den Trennwänden (8) und (12) zwei jeweils in kegelmantelartiger Form ausgebildete und in sich geschlossene Trennwände (8) und (10), die sich nach unten zu verjüngen, vorgesehen sind, welche die Beruhigungskammer (7) und den Verdichtungraum (14) bilden, und daß die Spalte (15) sich zwischen dem Boden (2) des Behälters und dem unteren Ende der Trennwand (8) befindet.

## Claims

1. A device for separating out activated sludge in installations for purifying waste water, formed by a system of transverse walls, a stilling basin (7) being formed by a transverse wall (10) and a separating wall (8) provided with an overflow edge (6), and beneath the said basin (7) a thickening chamber (14) is located and is delimited by the separating wall (8) and a further separating wall (12), a gap (15) being provided between the separating wall (12) and the base (2) of the device, the said gap being closable by means of a sliding valve (18) attached to the separating wall (12), the said gap connecting the thickening chamber (14) to a recirculation channel (21) formed by the separating wall (12), an adjustable transverse wall (17) and an aeration member (16).

2. A device in accordance with claim 1, **characterised in tha**t it is produced to be round in shape, in such a manner that, instead of the transverse wall (10) and the separating walls (8) and (12), two respective separating walls (8) and (10), each shaped as the generated surface of a cone, self-contained and tapering downwards, are provided and form the stilling basin (7) and the thickening chamber (14), and the gap (15) is located between the base (2) of the container and the lower end of the separating wall (8).

## Revendications

1. Dispositif pour la séparation de la boue activée dans des installations d'épuration des eaux usées, qui est formé par un système de parois transversales auquel cas il est constitué par l'intermédiaire d'une paroi transversale (10), d'une cloison (8) munie d'un bord de trop-plein (6), d'une chambre de stabilisation (7) en dessous de laquelle il se trouve un espace de compactage (14) délimité par la cloison (8) et par une cloison supplémentaire (12), une fente (15) étant prévue entre la cloison (12) et le fond du dispositif (2), fente qui est obturable par une vanne (18) se trouvant sur la cloison (12) et qui relie l'espace de compactage (14) à un canal de recirculation (21) se composant de la cloison (12), d'une paroi transversale réglable (17) et d'un élément de ventilation (16).

2. Dispositif selon la revendication 1, caractérisé en ce qu'il présente une forme ronde, qu'à la place de la paroi transversale (10) et des cloisons (8) et (12), il est prévu deux cloisons (8) et (10) fermées sur elles-même et se réduisant en forme d'aire latérale de cône vers le bas, lesquelles forment la chambre de stabilisation (7) et l'espace de compactage (14) et que la fente (15) se trouve entre le fond (2) du containeur et l'extrémité inférieure de la cloison (8).
